# EUROPÄISCHE PATENTSCHRIFT

(11) **EP 0 673 003 B1**
(45) Veröffentlichungstag und Bekanntmachung des Hinweises auf die Patenterteilung: **07.10.1998**
(21) Anmeldenummer: 95102893.5
(22) Anmeldetag: 01.03.1995
(51) Int. Cl.: G07C 9/00, B60R 25/00, E05B 49/00

(54) **Schlüssellose Zugangskontrolleinrichtung**
Keyless controlled access device
Système d'accès contrôlé sans enclenchement de clé

(30) Priorität: 17.03.1994 DE 4409167
(43) Veröffentlichungstag der Anmeldung: 20.09.1995
(73) Patentinhaber: SIEMENS AKTIENGESELLSCHAFT, 80333 München (DE)
(72) Erfinder: Glehr, Manfred, Dipl.-Ing., D-84307 Eggenfelden (DE)

(56) Entgegenhaltungen:
- EP-A- 0 138 090
- DE-A- 3 341 900
- DE-A- 4 003 280
- DE-C- 3 313 098

## Beschreibung

Die Erfindung betrifft eine fernsteuerbare, schlüssellose Zugangskontrolleinrichtung für ein Kraftfahrzeug. Sie weist eine Sende- und Empfangseinheit im Kraftfahrzeug sowie einen tragbaren Transceiver auf. Mit Hilfe eines bidirektionalen Dialogs zwischen der Sendeeinheit, dem Transceiver und der Empfangseinheit kann eine Entriegelungseinheit, z.B. eine Zentralverriegelungsanlage, gesteuert werden.

Eine solche Zugangskontrolleinrichtung ist aus der Patentschrift EP 0 138 090 B1 bekannt. Bei dieser Einrichtung werden ein tragbarer Transceiver und eine stationäre, im einem Kraftfahrzeug angeordnete Sende-/Empfangseinheit mit einem Frage-Antwort-Dialog zum Überprüfen eines Kraftfahrzeugbenutzers und zum Entriegeln des Kraftfahrzeugs im Falle eines berechtigten Benutzers eingesetzt. Die Abhörsicherheit des Dialogs wird durch unterschiedliche Reichweite der gesendeten und der empfangenen Signale gewährleistet (vgl. auch DE-A- 4 003 280).

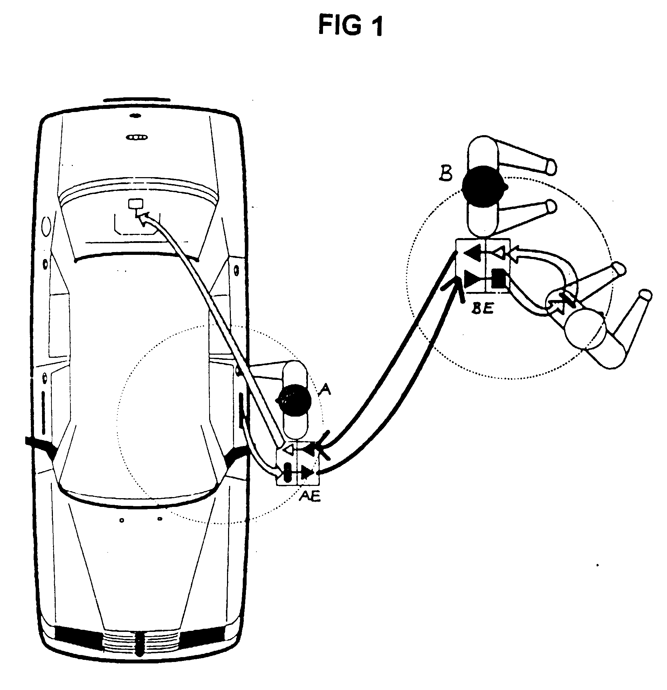

Eine solche Einrichtung kann jedoch auch überlistet werden. Eine solche Hintergehung wird anhand der Figur 1 näher erläutert. Der autorisierte Benutzer hat sich mit seinem Authentifikationsmedium (hier als Transceiver bezeichnet) bei verschlossenem Fahrzeug von diesem entfernt. Ein erster Gauner A geht zu dem Kraftfahrzeug, während sich ein zweiter Gauner B in der Nähe des autorisierten Benutzers aufhält. Beide Gauner tragen jeweils eine tragbare Sende- und Empfangseinheit AE oder BE bei sich, die jeweils Signale empfangen und die Empfangssignale über die jeweils andere Einrichtung entweder zu dem Kraftfahrzeug oder zu dem Transceiver senden können.

Wenn der Gauner A ein Auslösemittel (Türgriff) betätigt, so wird ein bidirektionaler Frage-Antwort-Dialog zwischen dem Kraftfahrzeug und dem Transceiver mit dem gezielten Umweg über die beiden Sende- und Empfangseinheiten AE und BE in Gang gesetzt. Im Normalfall würden bekanntlich die Signale des Transceivers nicht mehr das Kraftfahrzeug erreichen, da der Transceiver zu weit vom Kraftfahrzeug entfernt ist. Dennoch kann der Gauner A nun unberechtigterweise in das Kraftfahrzeug gelangen und dieses starten.

Der Erfindung liegt das Problem zugrunde, eine schlüssellose Zugangskontrolleinrichtung zu schaffen, die eine hohe Sicherheit vor unberechtigtem Zutritt bietet.

Dieses Problem wird erfindungsgemäß durch die Merkmale des Anspruchs 1 gelöst. Dabei wird durch eine im Kraftfahrzeug angeordnete Sendeeinheit bei Betätigen eines Auslösemittels ein Fragecodesignal ausgesendet. Ein tragbarer Transceiver mit einem Sender und einem Empfänger wird infolgedessen aktiviert und sendet seinerseits ein Antwortcodesignal, wenn sich das Kraftfahrzeug in unmittelbarer Nähe des Transceivers be findet. Dies wird durch eine Abstandsmessung festgestellt, die durch den Transceiver oder ein im Kraftfahrzeug angeordnetes Steuergerät veranlaßt wird.

Eine Empfangseinheit im Kraftfahrzeug liefert bei Übereinstimmung des Antwortcodesignals mit einem Sollcodesignal ein Entriegelungssignal an eine Entriegelungseinheit.

Vorteilhafte Weiterbildungen der Erfindung sind in den Unteransprüchen gekennzeichnet. Zur Abstandsbestimmung kann der Transceiver eine Abstandsdetektiereinrichtung aufweisen, die Ultraschall- oder UHF-Signale aussendet und deren reflektierte Signale von dem Transceiver empfangen werden. Aus der Laufzeit der Signale kann dann der Abstand berechnet werden. Der Transceiver kann auch einen Induktivempfänger mit einem zugeordneten Schwingkreis aufweisen, der wie ein Metalldetektor das Vorhandensein des Kraftfahrzeugs feststellt. Die Abstandsdetektiereinrichtung kann im Transceiver und/oder im Steuergerät angeordnet sein.

Ein Ausführungsbeispiel der Erfindung ist unter Bezugnahme auf die schematischen Zeichnungen näher erläutert. Es zeigen:
- Figur 1:: ein Kraftfahrzeug bei einem unberechtigten Zugang,
- Figur 2:: ein Kraftfahrzeug mit einer erfindungsgemäßen Zugangskontrolleinrichtung und
- Figur 3:: ein Flußdiagramm eines Frage-Antwort-Dialogs zwi schen einem Transceiver und einem Steuergerät.

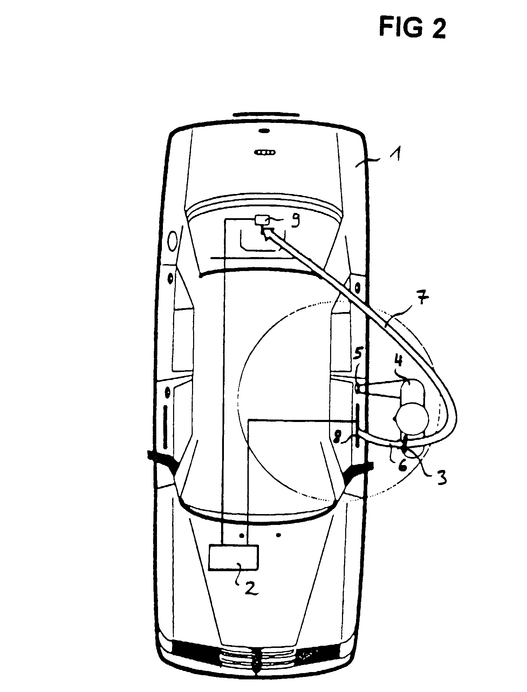

Eine schlüssellose und fernsteuerbare Zugangskontrolleinrich tung wird am Beispiel der Verwendung in einem Kraftfahrzeug im folgenden näher erläutert. In dem Kraftfahrzeug 1 (Figur 2) ist ein Steuergerät 2 mit einer Sendeeinheit und einer Empfangseinheit angeordnet. Das Steuergerät 2 kann mit einem tragbaren Transceiver 3, der sich in einer Jackentasche eines Benutzers in einem Abstand zu dem Kraftfahrzeug 1 befindet, mittels eines Frage-Antwort-Dialogs drahtlos in Verbindung treten. Dabei wird überprüft, ob ein Benutzer 4 des Transceivers 3 berechtigt ist, das Kraftfahrzeug 1 zu entriegeln oder verriegeln.

Das Steuergerät 2 ist beispielsweise mit einem Auslösemittel, beispielsweise einem Türgriff 5, verbunden, durch den veranlaßt wird, daß das Steuergerät 2 einen bidirektionalen, drahtlosen Frage-Antwort-Dialog mit dem Transceiver 3 in Gang setzt.

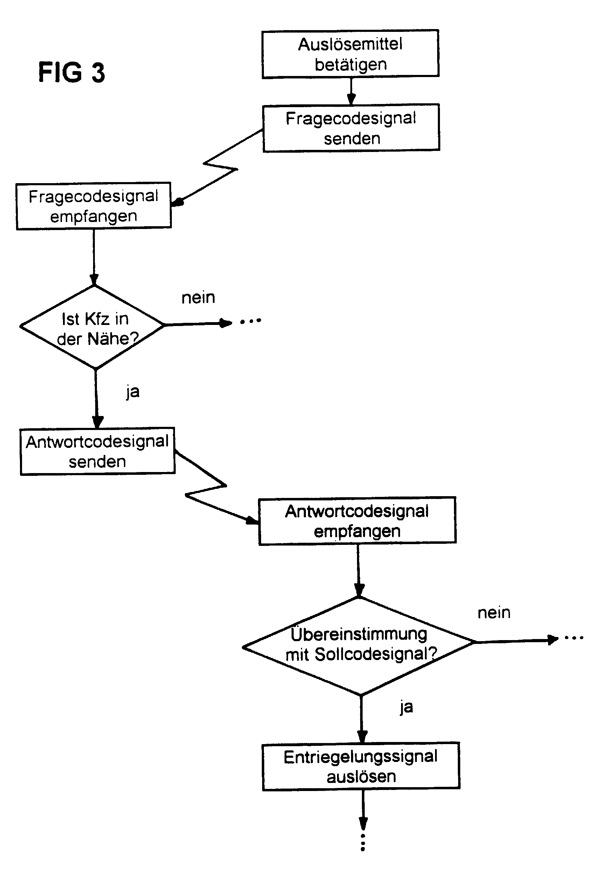

Der Frage-Antwort-Dialog zum Entriegeln oder Verriegeln des Kraftfahrzeugs 1 wird anhand von Figur 3 näher erläutert. Als Auslösemittel dient der Türgriff 5. Nach dessen Betätigung sendet eine Sendeeinheit 8 des Steuergeräts 2 ein Fragecodesignal 6 aus (in dem Flußdiagramm durch einen blitzförmigen Pfeil dargestellt, da es sich um eine drahtlose Übertragung handelt). Das Fragecodesignal 6 wird von dem Transceiver 3 empfangen.

Daraufhin überprüft der Transceiver 3 mit Hilfe einer Abstandsdetektiereinrichtung, ob sich das Kraftfahrzeug 1 in seiner unmittelbaren Nähe befindet. Ist das Kraftfahrzeug 1 nahe genug an dem Transceiver 3, sendet dieser ein Antwortcodesignal 7 aus, ansonsten wird der Frage-Antwort-Dialog abgebrochen. Es kann auch ein Alarm ausgegeben werden, falls der Abstand zum Kraftfahrzeug 1 zu groß ist und versucht wurde, sich Zugang zu dem Kraftfahrzeug 1 zu verschaffen.

Das Antwortcodesignal 7 wird von einer Empfangseinheit 9 des Steuergeräts 2 empfangen und mit einem erwarteten Sollcodesignal verglichen. Falls der Benutzer 4 des Transceivers 3 berechtigt ist, d.h. wenn das Antwortcodesignal 7 mit dem Sollcodesignal übereinstimmt, wird ein Entriegelungssignal ausgelöst. Das Kraftfahrzeug 1 ist somit entriegelt.

Um die Abhörsicherheit des Frage-Antwort-Dialogs zu erhöhen, kann das Fragecodesignal 6 und das Antwortcodesignal 7 nach einem vorgegebenen Algorithmus ständig gewechselt werden. Da für die Erfindung das Generieren von Codesignalen unwesentlich und für sich hinreichend bekannt ist, wird hier nicht näher darauf eingegangen.

Die Sendeeinheit 8 ist mit einer oder mehreren Sendeantennen verbunden, die in den Außenspiegeln und/oder im Innenspiegel oder den Türen des Kraftfahrzeugs 1 angeordnet sind. Die Empfangsantennen sind so angeordnet, daß sie Signale aus allen Richtungen empfangen können. So kann die Sendeantenne auch am Heck des Fahrzeugs angeordnet sein. Die Radioantenne kann ebenfalls als Empfangsantenne für die Empfangseinheit 9 dienen.

Von der Empfangseinheit 9 wird als Entriegelungseinheit beispielsweise die Zentralverriegelungsanlage gesteuert. Die Entriegelungseinheit ist ebenfalls in dem Steuergerät 2 untergebracht. Das Steuergerät 2 kann sich an beliebiger Stelle im Kraftfahrzeug 1 befinden. Das Steuergerät 2 mit der Empfangseinheit 9, der Sendeeinheit 8, der Zentralverriegelungsanlage und unter Umständen mit zumindest einem Teil der Abstandsdetektiereinrichtung wird von der Autobatterie mit Energie versorgt.

Der tragbare Transceiver 3 weist seinerseits einen Empfänger und einen Sender auf, die ebenfalls von einer Batterie in Form einer Knopfzelle mit Energie versorgt werden. Der Sender und der Empfänger können zugleich zum Messen des Abstands zwischen dem Transceiver 3 und dem Kraftfahrzeug 1 dienen, d.h. sie können zugleich die Abstandsdetektiereinrichtung sein. Es können aber auch ein zusätzlicher Sender und ein Empfänger vorhanden sein, durch die der Abstand bestimmt wird.

Zum Messen des Abstands Transceiver - Kraftfahrzeug kann die Abstandsdetektiereinrichtung UHF-Signale oder Ultraschallsignale aussenden. Durch das Kraftfahrzeug 1 werden die Signale zurück zu dem Transceiver 3 reflektiert oder von dem Steuergerät 2 empfangen, verstärkt und zurückgesendet. Aus der gesamten gemessenen Laufzeit kann der Abstand Transceiver - Kraftfahrzeug festgestellt werden.

Werden UHF-Signale zum Messen des Abstands verwendet, so sollten wegen der geringen Laufzeiten von ca. 10 ns sehr hohe Frequenzen im MHz-Bereich oder im GHz-Bereich verwendet werden. Die Sender und Empfänger arbeiten dann ähnlich dem Radarverfahren.

Die Nähe des Kraftfahrzeuges 1 kann auch durch eine Spule mit einem zugeordneten Schwingkreis festgestellt werden, die wie ein Metallsuchgerät funktioniert. Dabei wird das Vorhandensein der großen Metallmasse des Kraftfahrzeugs 1 festgestellt.

Der maximal zulässige Abstand Transceiver - Kraftfahrzeug wird einerseits durch die kleinere Reichweite des Fragecodesignals 6 oder des Antwortcodesignals 7 bestimmt oder andererseits durch Erfahrungswerte, wie weit der Transceiver 3 von dem Kraftfahrzeug 1 entfernt sein darf, damit sich ein Benutzer 4 noch zuverlässig berechtigterweise Zugang verschaffen kann. Über diesen Abstand hinaus darf kein Zugang mehr zu dem Kraftfahrzeug 1 möglich sein. Der maximale Abstand beträgt etwa 1 bis 2 m.

Das Steuergerät 2 im Kraftfahrzeug 1 kann gleichermaßen zumindest einen Teil der Abstandsdetektiereinrichtung aufweisen und Ultraschallsignale oder UHF-Signale aussenden, die von dem Transceiver 3 empfangen werden. Der Transceiver 3 reagiert darauf mit einem Antwortsignal. Das Steuergerät 2 errechnet dann aus der gemessenen Laufzeit die Entfernung Transceiver - Kraftfahrzeug und entscheidet aufgrund der Laufzeit, ob der Frage-Antwort-Dialog fortgesetzt oder abgebrochen wird.

Der Transceiver 3 ist vorteilhafterweise als Chipkarte ausgebildet. Der Transceiver 3 kann auch in Form eines herkömmlichen Schlüssels, in dem der Sender, der Empfänger, die Spannungsquelle und zumindest ein Teil der Abstandsdetektiereinrichtung angeordnet sind, ausgebildet sein.

## Patentansprüche

1. Einrichtung zur Kontrolle des schlüssellosen Zuganges zu einem Kraftfahrzeug (1),
- mit einer im Kraftfahrzeug angeordneten Sendeeinheit (8), die bei Betätigen eines Auslösemittels (5) ein Fragecodesignal (6) aussendet,
- mit einem von einem Benutzer (4) mitgeführten Transceiver (3),
- mit einem im Transceiver (3) befindlichen Empfänger, der das Fragecodesignal empfängt, und
- mit einer im Kraftfahrzeug angeordneten Empfangseinheit (9), die bei Überein stimmung zwischen einem vom Transceiver (3) empfangenen Antwortcodesignal (7) und einem Sollcodesignal ein Entriegelungssignal an eine Entriege lungseinheit liefert, dadurch gekennzeichnet, daß eine Abstandsdetektiereinrichtung vorgesehen ist, die den Abstand zwischen einem Transceiver (3) und dem Kraftfahrzeug (1) mißt, und daß ein im Transceiver (3) befindlicher Sender das Antwortcodesignal (7) nur dann aussendet, wenn sich das Kraftfahrzeug (1) in unmittelbarer Nähe des Transceivers (3) befindet.

2. Einrichtung zur Kontrolle des schlüssellosen Zuganges zu einem Kraftfahrzeug (1) nach Anspruch 1, dadurch gekennzeichnet, daß die Abstandsdetektiereinrichtung einen Ultraschallsender und einen Ultraschallempfänger aufweist.

3. Einrichtung zur Kontrolle des schlüssellosen Zuganges zu einem Kraftfahrzeug nach Anspruch 1, dadurch gekennzeichnet, daß die Abstandsdetektiereinrichtung einen UHF-Sender und einen UHF-Empfänger aufweist.

4. Einrichtung zur Kontrolle des schlüssellosen Zuganges zu einem Kraftfahrzeug nach Anspruch 2, dadurch gekennzeichnet, daß die Abstandsdetektiereinrichtung einen Induktivempfänger mit zugeordnetem Schwingkreis aufweist.

5. Einrichtung zur Kontrolle des schlüssellosen Zuganges zu einem Kraftfahrzeug nach Anspruch 1, dadurch gekennzeichnet, daß das Auslösemittel ein Türgriff (5) ist, der mit der Sendeeinheit elektrisch verbunden ist.

6. Einrichtung zur Kontrolle des schlüssellosen Zuganges zu einem Kraftfahrzeug nach Anspruch 1, dadurch gekennzeichnet, daß die Abstandsdetektiereinrichtung in dem Transceiver (3) angeordnet ist.

7. Einrichtung zur Kontrolle des schlüssellosen Zuganges zu einem Kraftfahrzeug nach Anspruch 1, dadurch gekennzeichnet, daß die Abstandsdetektiereinrichtung in einem Steuergerät (2) im Kraftfahrzeug (1) angeordnet ist.

8. Einrichtung zur Kontrolle des schlüssellosen Zuganges zu einem Kraftfahrzeug nach Anspruch 1, dadurch gekennzeichnet, daß ein Teil der Abstandsdetektiereinrichtung in dem Steuergerät (2) im Kraftfahrzeug und ein anderer Teil in dem tragbaren Transceiver (3) angeordnet ist.

## Claims

1. Device for controlling the keyless access to a motor vehicle (1),
- comprising a transmitting unit (8), arranged in the motor vehicle, which sends out an interrogation code signal (6) when a trigger means (5) is actuated,
- comprising a transceiver (3) carried by a user (4),
- comprising a receiver, located in the transceiver (3), which receives the interrogation code signal, and
- comprising a receiving unit (9), arranged in the motor vehicle, which, if there is agreement between a response code signal (7) sent by the transceiver (3) and a nominal code signal, supplies an unlocking signal to an unlocking unit, characterized in that
a distance detecting device is provided which measures the distance between a transceiver (3) and the motor vehicle (1), and that a transmitter located in the transceiver (3) only sends out the response code signal (7) when the motor vehicle (1) is located in the immediate vicinity of the transceiver (3).

2. Device for controlling the keyless access to a motor vehicle (1) according to Claim 1, characterized in that the distance detecting device exhibits an ultrasonic transmitter and an ultrasonic receiver.

3. Device for controlling the keyless access to a motor vehicle according to Claim 1, characterized in that the distance detecting device exhibits a UHF transmitter and a UHF receiver.

4. Device for controlling the keyless access to a motor vehicle according to Claim 2, characterized in that the distance detecting device exhibits an inductive receiver comprising an associated resonant circuit.

5. Device for controlling the keyless access to a motor vehicle according to Claim 1, characterized in that the triggering means is a doorhandle (5) which is electrically connected to the transmitting unit.

6. Device for controlling the keyless access to a motor vehicle according to Claim 1, characterized in that the distance detecting device is arranged in the transceiver (3).

7. Device for controlling the keyless access to a motor vehicle according to Claim 1, characterized in that the distance detecting device is arranged in a control device (2) in the motor vehicle (1).

8. Device for controlling the keyless access to a motor vehicle according to Claim 1, characterized in that a part of the distance detecting device is arranged in the control device (2) in the motor vehicle and another part is arranged in the portable transceiver (3).

## Revendications

1. Dispositif de contrôle de l'accès sans clé à un véhicule automobile (1), comprenant
- une unité émettrice (8), disposée dans le véhicule automobile, qui émet un signal codé d'interrogation (6) lors d'un actionnement d'un moyen de déclenchement (5),
- un récepteur-émetteur (3) qu'un utilisateur (4) prend avec lui,
- un récepteur, situé dans le récepteur-émetteur (3), qui reçoit le signal codé d'interrogation et
- une unité réceptrice (9), disposée dans le véhicule automobile, qui délivre un signal de déverrouillage à une unité de déverrouillage lors d'une coïncidence entre un signal codé de réponse (7) émet par le récepteur-émetteur (3) et un signal codé de consigne,
caractérisé
en ce qu'il est prévu un dispositif de détection de distance qui mesure la distance séparant un récepteur-émetteur (3) du véhicule automobile (1) et en ce qu'un émetteur situé dans le récepteur-émetteur (3) n'envoie le signal codé de réponse (7) que lorsque le véhicule automobile (1) se trouve au voisinage direct du récepteur-émetteur (3).

2. Dispositif de contrôle de l'accès sans clé à un véhicule automobile (1) suivant la revendication 1, caractérisé en ce que le dispositif de détection de distance comprend un émetteur à ultrasons et un récepteur à ultrasons.

3. Dispositif de contrôle de l'accès sans clé à un véhicule automobile suivant la revendication 1, caractérisé en ce que le dispositif de détection de distance comprend un émetteur à hyperfréquences et un récepteur à hyperfréquences.

4. Dispositif de contrôle de l'accès sans clé à un véhicule automobile suivant la revendication 2, caractérisé en ce que le dispositif de détection de distance comprend un récepteur inductif comportant un circuit oscillant associé.

5. Dispositif de contrôle de l'accès sans clé à un véhicule automobile suivant la revendication 1, caractérisé en ce que le moyen de déclenchement est une poignée de porte (5) qui est reliée électriquement à l'unité émettrice.

6. Dispositif de contrôle de l'accès sans clé à un véhicule automobile suivant la revendication 1, caractérisé en ce que le dispositif de détection de distance est disposé dans le récepteur-émetteur (3).

7. Dispositif de contrôle de l'accès sans clé à un véhicule automobile suivant la revendication 1, caractérisé en ce que le dispositif de détection de distance est disposé dans un appareil de commande (2) situé dans le véhicule automobile (1).

8. Dispositif de contrôle de l'accès sans clé à un véhicule automobile suivant la revendication 1, caractérisé en ce qu'une partie du dispositif de détection de distance est disposée dans l'appareil de commande (2) situé dans le véhicule automobile et une autre partie dans le récepteur-émetteur (3) portable.
